# EUROPEAN PATENT APPLICATION

(11) **EP 1 634 635 A1**
(43) Date of publication of application: **15.03.2006**
(21) Application number: 05108095.0
(22) Date of filing: 02.09.2005
(51) Int. Cl.: B01D 50/00, B01D 45/14, B01D 46/02

(54) **Mist removing apparatus and mist removing method**

(30) Priority: 02.09.2004 JP 2004256361
(71) Applicant: O-DEN Corporation, Tokyo (JP)
(72) Inventor: ENDO, Kiyomu, O-DEN Corporation, Koutou-ku, Tokyo (JP)
(74) Representative: Ghioni, Carlo Raoul Maria

(57) **Abstract**

To provide a mist removing apparatus capable of improving mist-removing efficiency and to contribute to size reduction, weight reduction, and cost reduction in spite of a simple configuration. Air drawn in from an inlet and including oil mist is centrifugally accelerated by an air blower (3), passes toward a mist capture chamber (5) at high speed. In the mist capture chamber (5), while the air passes through a bag-shaped non-woven fabric (21), the oil mist moves along an axis direction of the bag-shaped non-woven fabric (21) toward a bottom by the inertial force and the gravity thereof. Therefore, oil mist results in being further removed from air blown on a filter wall portion on its way in an air passage along the axis direction of the bag-shaped non-woven blower (3). Oil mist still remaining in the air blown on the filter wall portion is filtered by the filter wall portion as well. Therefore, the cleaned air is discharged from the filter wall portion.

## Description

### Field of the Invention

The present invention relates to a mist removing apparatus and a mist removing method, and in particular, relates to a mist removing apparatus and a mist removing method suitable to remove oil mist generated in a machine tool and to discharge clean air.

The present application claims priority of Japanese Patent Application No. 2004-256361 filed on September 2, 2004.

### Description of the Related Art

As shown in Fig. 18, in a plant building 101 in a factory, a large number of machine tools 102 such as cutting tools are arranged. For example, a cutting machine 103 including a lathe and a miller, as shown in Fig. 19 and Fig. 20, is provided with a headstock 105 and a tailstock 106 for holding a subject 104 made of metal such as steel, and a cutting tool 107. Further, the cutting machine 103 is provided with an oil supply device 108 for supplying a cutting lubricant of which the main ingredient is mineral oil (hereinafter referred to as oil) during cutting, and a cleaning device 109.

The oil supply device 108 is provided with an oil tank 110, and an oil pump 111 and an oil jet pipe 112 for supplying oil to a cutting position. The oil supplied from the oil jet pipe 112 to the subject is changed into mist, and is mixed with water vapor in the air. Thus, a gaseous medium (hereinafter, may be referred to as oil mist air or mist air) containing oil mist is obtained.

If the oil mist air remains in the plant building 101 of the factory without being treated, the inside of the plant building 101 of the factory will become polluted with oil mist. Hence, the air is exhausted from the inside of the plant after removing oil mist through the cleaning device 109. The cleaning device 109 is provided with filter units 113a, 113b disposed on an airflow path and using nickel metal filters having porous structures. The oil mist in the air is removed by the filter units 113a and 113b, the oil mist captured by the filter units 113a and 113b is flocculated so as to drop as oil, and the oil is stored in an oil storage unit 114.

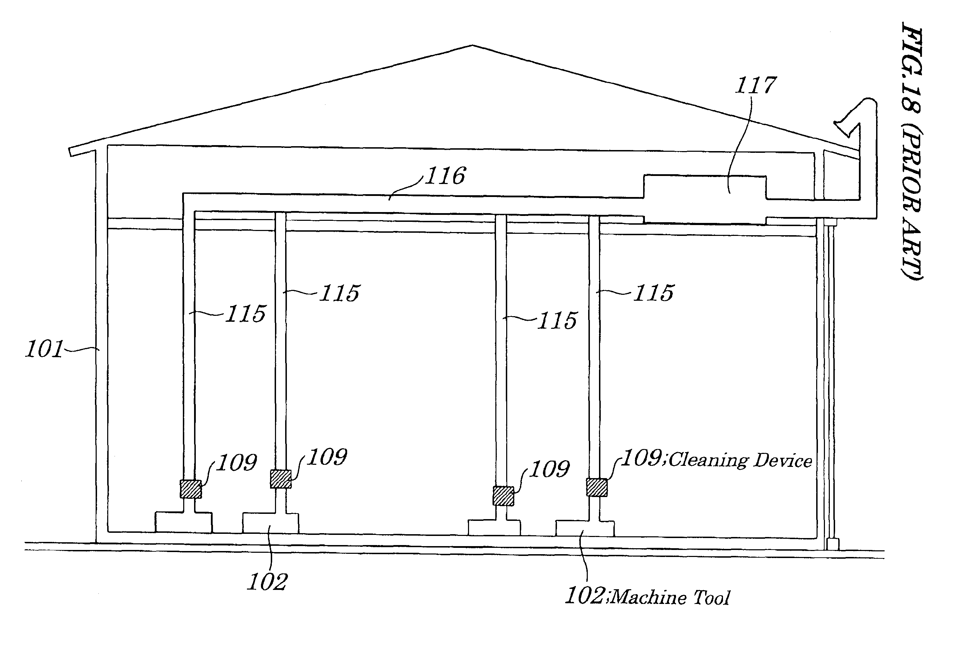

As shown in Fig. 18, each cleaning device 109 is arranged for each machine tool 102, and is connected to each duct 115. The ducts 115 are connected to an electrostatic precipitator 117 via a converging duct 116.

The oil mist is removed by the cleaning device 109 from air generated in each machine tool 102. Then, all of the air is introduced into the electrostatic precipitator 117, and the electrostatic precipitator 117 removes mainly humidity which is not removed by the cleaning device 109, so that cleaned air is discharged.

However, the cleaning device 109 is set for each machine tool 102 at the position thereof, and is also connected to each duct 115. Humidity is removed by the electrostatic precipitator 117, and the air is discharged to the outside (of the plant building 101 of the factory).

With this arrangement, when the electrostatic precipitator 117 starts to operate, air is drawn also from the cleaning device 109 corresponding to the machine tool 102 not in use, and therefore power is wasted. Therefore, there is a problem that unnecessary cost increases in order to maintain the cleaning device 109. Further, since this arrangement is large, there is a problem that costs increase when introduced.

Further, when the machine tools 102 are rearranged or another kind of machine tool 102 is introduced, there are possibilities that the ducts 115 must be re-laid or a motor capacity of the electrostatic precipitator 117 must be changed. Therefore, there is a problem that this arrangement has no flexibility for renovation.

To solve the above-mentionedproblems, a technique is proposed in which an oil mist removing apparatus for drawing air including oil mist, removing oil mist from the air via a filter and a like, and discharging cleaned air is arranged in the vicinity of the machine tool (for example, Japanese Patent Application Laid-open No.2002-113316).

However, there is a problem that, in spite of the above-mentioned oil mist removing apparatus, it is difficult to reduce cost, to reduce size, and to reduce weight while maintaining oil mist removing efficiency.

### SUMMARY OF THE INVENTION

In view of the above, it is an obj ect of the present invention to provide a mist removing apparatus and a mist removing method capable of improving oil mist removing efficiency with a simple configuration and contributing to cost reduction, size reduction, and weight reduction.

According to a first aspect of the present invention, there is provided a mist removing apparatus for drawing in air with mist, removing the mist contained in the air, and exhausting cleaned air, the apparatus including:
an air exhaust intake fan portion for drawing in the air with mist; and
a mist capture chamber for capturing/ removing the mist from the air flowing in from the air exhaust intake fan portion and for exhausting the cleaned air, and
wherein the mist capture chamber includes an inflow port for causing the air with the mist pressurized and accelerated by the air exhaust intake fan portion flow through, a mist capture portion arranged to block the flow of the air with mist flowing in via the inflow port, for capturing the mist by causing the mist collide directly or indirectly therewith, and
a filtering member, surrounding a specified space between the inflow port and the mist capture portion, for exhausting the cleaned air.

According to a second aspect of the present invention, there is provided a mist removing apparatus for drawing in air with mist, removing the mist contained in the air, and exhausting cleaned air, the apparatus including:
an air exhaust intake fan portion for drawing in the air with mist from an external, and for flocculating the mist contained in the air by pressurizing the air; and
a mist capture chamber for capturing/ removing the flocculated mist from the air flowing in from the air exhaust intake fan portion and for exhausting the cleaned air, and
wherein the mist capture chamber includes an inflow port for causing the air with the mist pressurized and accelerated by the air exhaust intake fan portion flow through, a mist capture portion arranged to block the flow of the air with mist flowing in via the inflow port, for capturing the mist by causing the mist collide directly or indirectly therewith, and
a filtering member, surrounding a specified space between the inflow port and the mist capture portion, for exhausting the cleaned air.

According to a third aspect of the present invention, there is provided a mist removing apparatus for drawing in air with mist, removing the mist contained in the air, and exhausting cleaned air, the apparatus including:
an air exhaust intake fan portion for drawing in the air with mist; and
a mist capture chamber for capturing/ removing the mist from the air flowing in from the air exhaust intake fan portion and for exhausting the cleaned air, and
wherein the mist capture chamber includes an inflow port for causing the air with the mist pressurized and accelerated by the air exhaust intake fan portion flow through, and
a filtering member, surrounding a specified space under the inflow port, for exhausting the cleaned air,
the mist capture chamber configured to serve as an adiabatic expansion chamber for flocculating the mist flowing in via the inflow port to be captured by the filtering member.

In the foregoing third aspect, a preferable mode is one wherein a cross-sectional area of the inflow port is set within a range of 1/2 to 1/5 of same of the filtering member.

According to a fourth aspect of the present invention, there is provided a mist removing apparatus for drawing in air with mist, removing the mist contained in the air, and exhausting cleaned air, the apparatus including:
an air exhaust intake fan portion for drawing in the air with mist from an external, and for flocculating the mist contained in the air by pressurizing the air; and
a mist capture chamber for capturing/ removing the mist from the air flowing in from the air exhaust intake fan portion and for exhausting the cleaned air, and
wherein the mist capture chamber includes an inflow port for causing the air with the mist pressurized and accelerated by the air exhaust intake fan portion flow through, and
a filtering member, surrounding a specified space under the inflow port, for exhausting the cleaned air,
the mist capture chamber configured to serve as an adiabatic expansion chamber for flocculating further the mist flowing in via the inflow port to be captured by the filtering member.

According to a fifth aspect of the present invention, there is provided a mist removing apparatus for drawing in air with mist, removing the oil mist included in the mist air, and exhausting cleaned air, the apparatus including:
an air exhaust intake fan portion for drawing in the mist air with mist;
an air passage through which the mist air with mist accelerated by the air exhaust intake fan portion passes;
a mist receiving part arranged at an end of the air passage and for receiving the mist; and
a filtering member arranged at a side of the air passage and for exhausting the cleaned air.

According to a sixth aspect of the present invention, there is provided a mist removing apparatus for drawing in air with mist, removing mist contained in the air, and exhausting cleaned air, the apparatus including:
an air exhaust intake fan portion for drawing in the air with mist;
a high-speed air passage through which the air with mist accelerated by the air exhaust intake fan portion passes;
a mist receiving part arranged at an opening end of the high-speed air passage for receiving and capturing the mist; and
a filtering member arranged at a side of the high-speed air passage and for exhausting the cleaned air.

In the foregoing, a preferable mode is one wherein the filtering member is made of any one of a porous material, a fabric material, and a non-woven material.

Also, a preferable mode is one wherein the filtering member is made of any one of a porous material, a fabric material, and a non-woven material having openings through which mist having an average size passes.

Also, a preferable mode is one wherein a pre-filter for removing the mist is arranged in front of the air exhaust intake fan portion.

Furthermore, a preferable mode is one wherein the exhaust intake fan portion includes a centrifugal-type fan having a blade wheel in which a plurality of blades is arranged in a ring-like form and being mounted in a manner that a central axis of the blade wheel approximately conforms to a central axis of the front opening portion, in which the exhaust intake fan portion, while being operated, captures air from a direction of the central axis of the blade wheel, provides the captured air with turn-around flows, and forcedly feeds, by using generated centrifugal force, air that turns around, from clearances among the blades toward a direction of a portion surrounding the blade wheel.

According to a seventh aspect of the present invention, there is provided a mist removing method for removing mist included in drawn in air with mist, and exhausting cleaned air, the method including steps of:
drawing in and accelerating air with mist by an air exhaust intake fan portion and exhausting the air at high speed; and
arranging a mist receiving part in front of exhausted air, capturing the mist, and separating and removing the mist from the air, while exhausting the air via a filtering member to an outside.

In the foregoing, a preferable mode is one wherein the filtering member is made of any one of a porous material, a fabric material, and a non-woven material.

Also, a preferable mode is one wherein the filtering member is made of any one of a porous material, a fabric material, and a non-woven material having openings through which mist having an average size passes.

According to an eighth aspect of the present invention, there is provided a mist removing apparatus for drawing in air with mist, removing oil mist included in the drawn air, and exhausting cleaned air, including:
an air exhaust intake fan portion for drawing in air with mist; and
an adiabatic expansion chamber for removing flocculated oil mist by inflow of air accelerated or compressed with the air exhaust intake fan portion and by adiabatic expansion of the air:
wherein the adiabatic expansion chamber includes a bag-shaped filtering member of which one end is closed or a cylindrical filtering member of which both ends are open.

With these configurations, while the air discharged from the air exhaust intake fan portion and including the mist passes through the high-speed air passage, and is captured by the mist receiving part arranged at the end so as to be removed, air including no mist is blown on the filtering member at the side, and passes through the filtering member so as to be discharged. Since the air which passes through the filtering member and is discharged therefrom is clean air in which mist is removed, it is possible to improve mist-removing efficiency and to contribute to size reduction, weight reduction, and cost reduction in spite of a simple configuration.

### BRIEF DESCRIPTION OF THE DRAWINGS

The above and other objects, advantages, and features of the present invention will be more apparent from the following description taken in conjunction with the accompanying drawings in which:

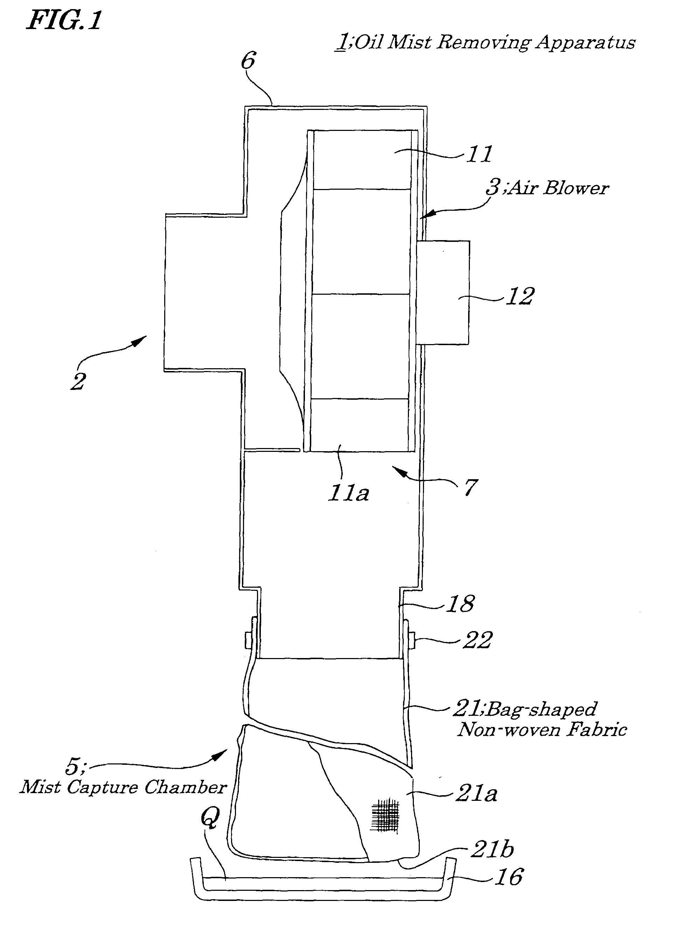

Fig. 1 is a sectional view showing a schematic configuration of an oil mist removing apparatus according to a first embodiment of the present invention;

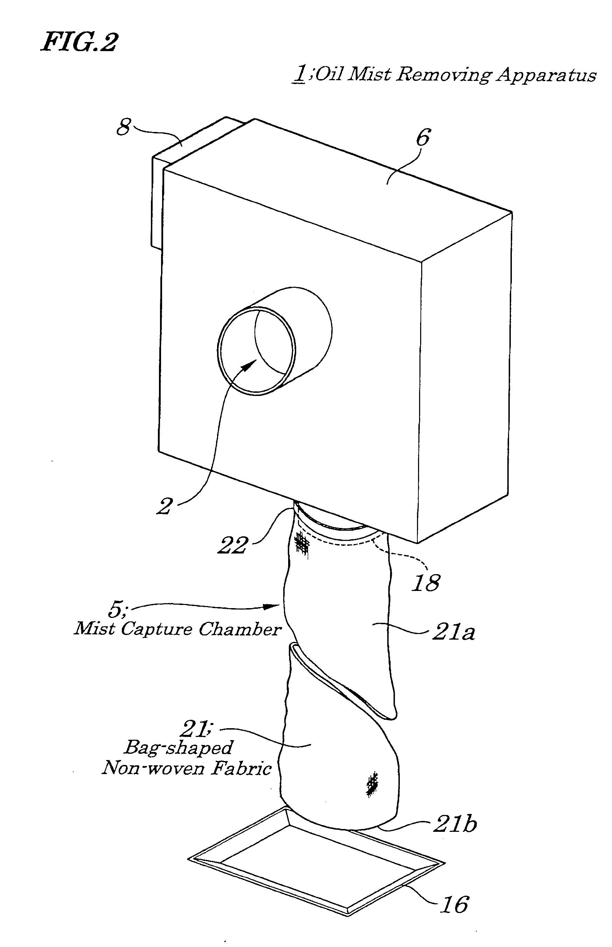

Fig. 2 is a perspective view showing a schematic configuration of the oil mist removing apparatus according to the first embodiment of the present invention;

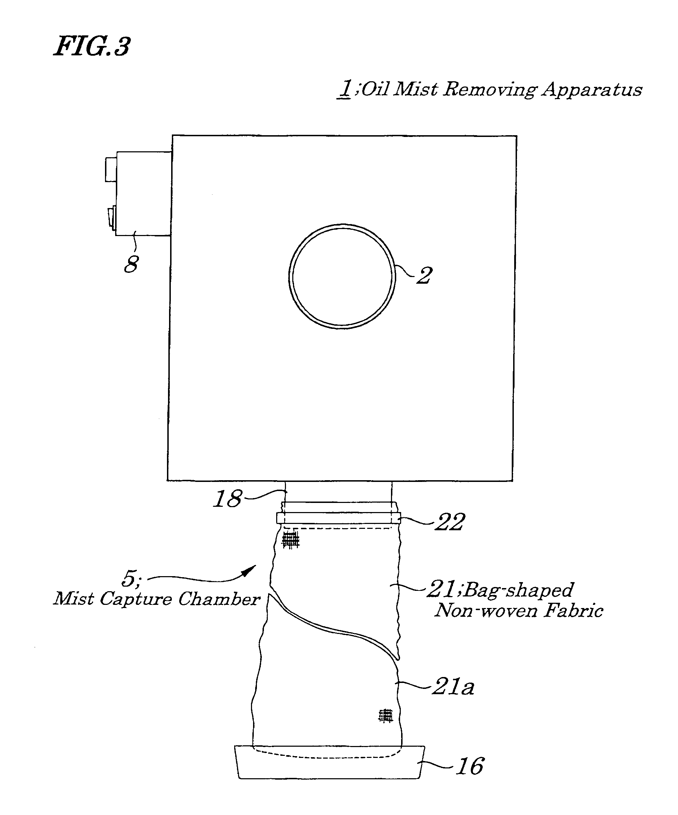

Fig. 3 is an elevation view showing a schematic configuration of the oil mist removing apparatus according to the first embodiment of the present invention;

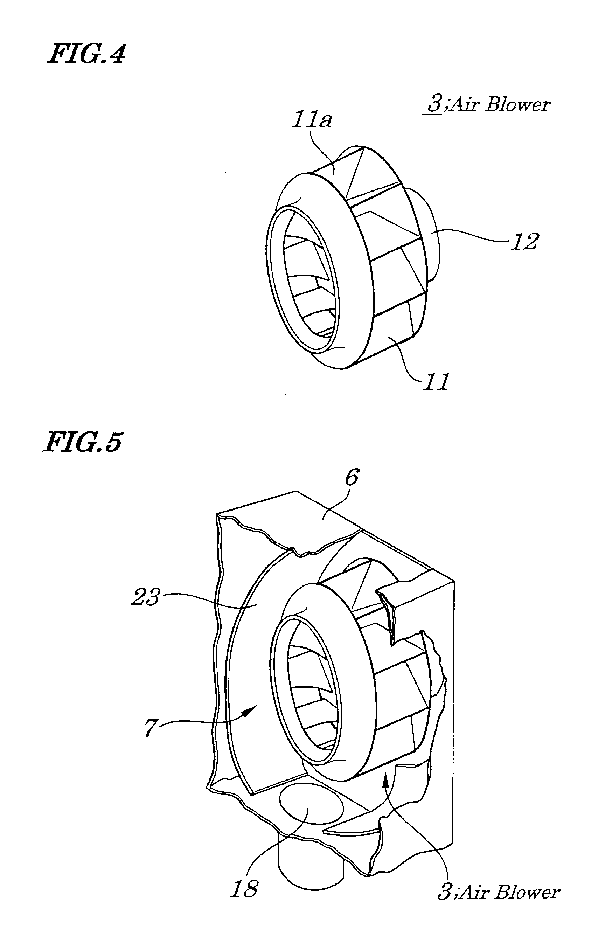

Fig. 4 is a perspective view showing a configuration of an air blower in the oil mist removing apparatus according to the first embodiment of the present invention;
Fig. 5 is a perspective view showing a configuration of a guide unit arranged around the air blower according to the first embodiment of the present invention;

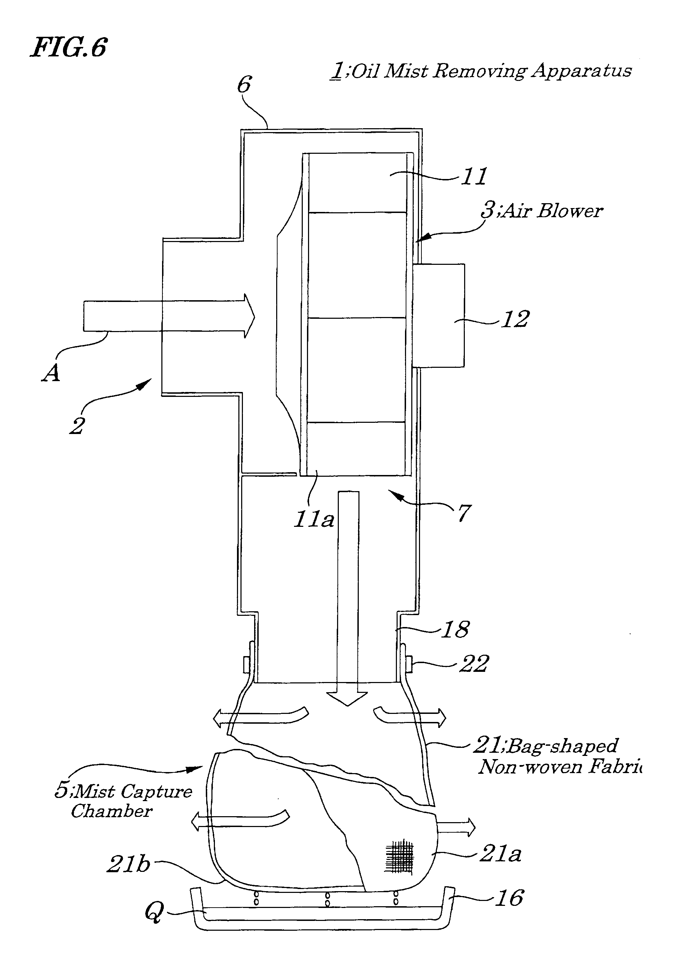

Fig. 6 is a sectional view for explaining an operation of the oil mist removing apparatus according to the first embodiment of the present invention;

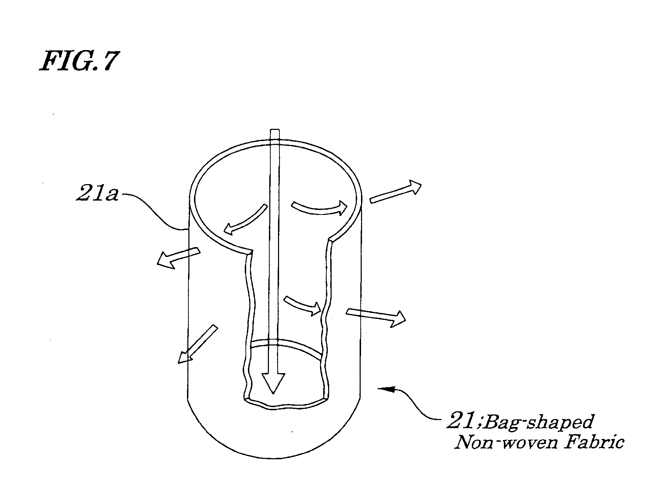

Fig. 7 is a view for explaining a function of an mist capture chamber in the oil mist removing apparatus according to the first embodiment of the present invention;

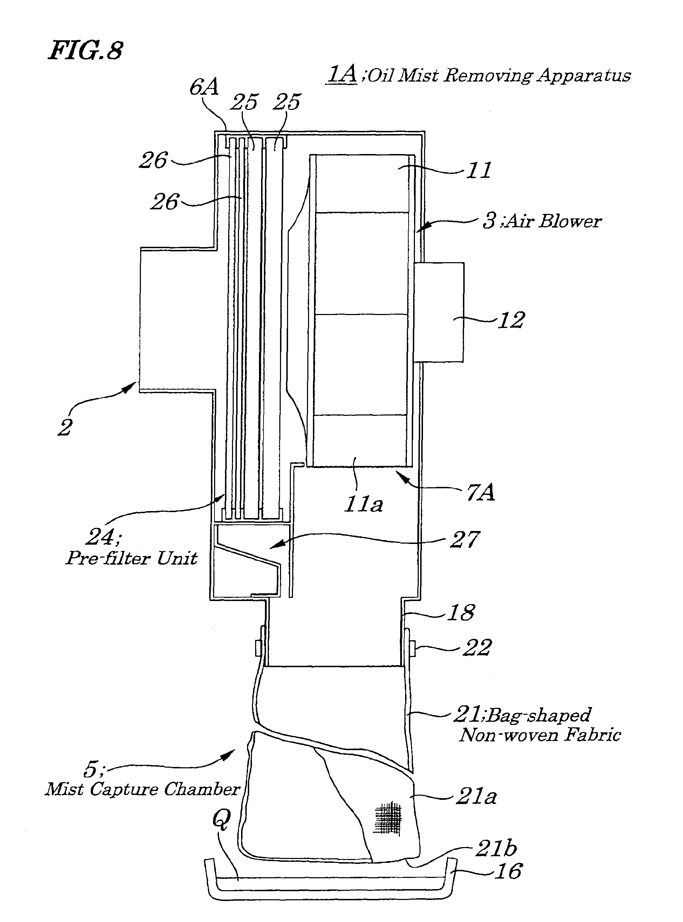

Fig. 8 is a sectional view showing a schematic configuration of an oil mist removing apparatus according to a second embodiment of the present invention;

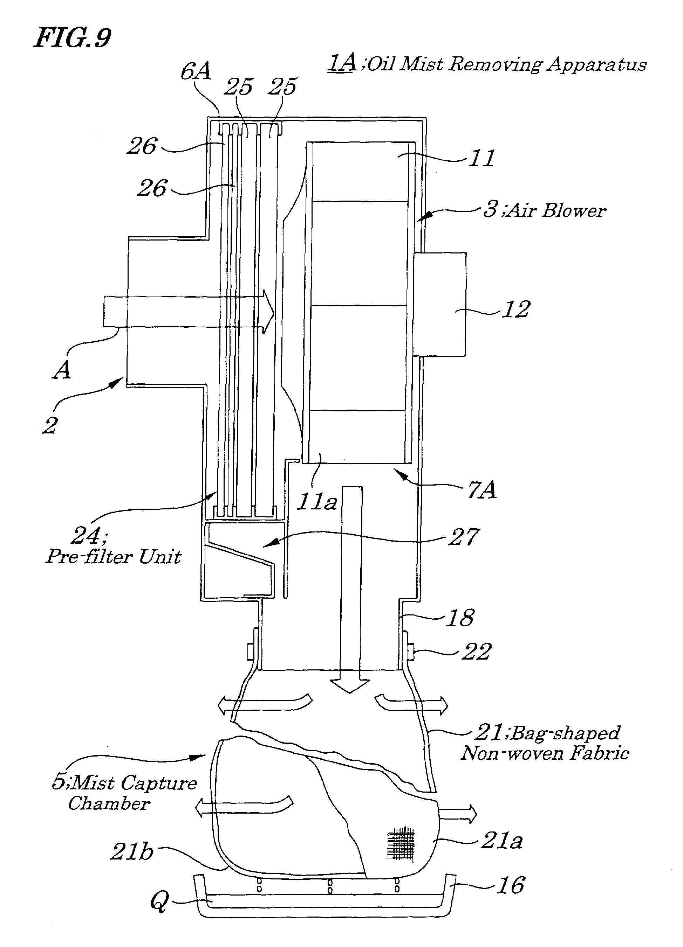

Fig. 9 is a sectional view for explaining an operation of the oil mist removing apparatus according to the second embodiment of the present invention;

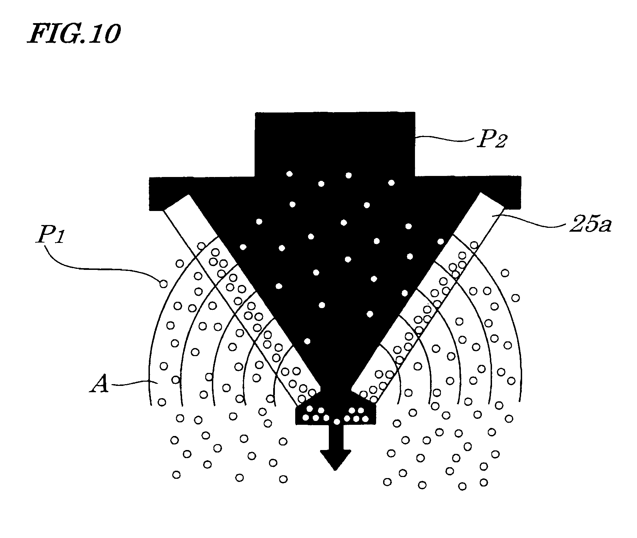

Fig. 10 is a view for explaining a function of a porous filter of a filter unit in the oil mist removing apparatus according to the second embodiment of the present invention;

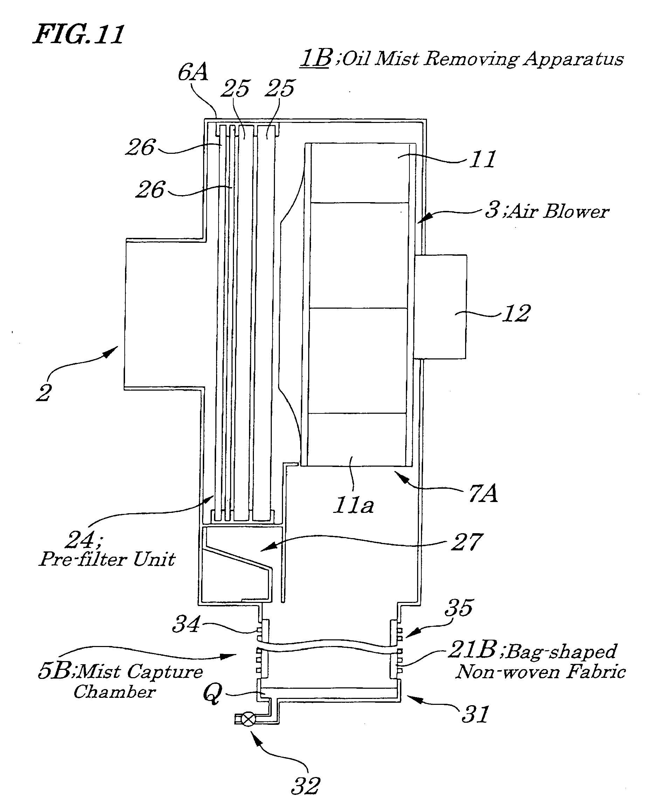

Fig. 11 is a sectional view showing a schematic configuration of an oil mist removing apparatus according to a third embodiment of the present invention;

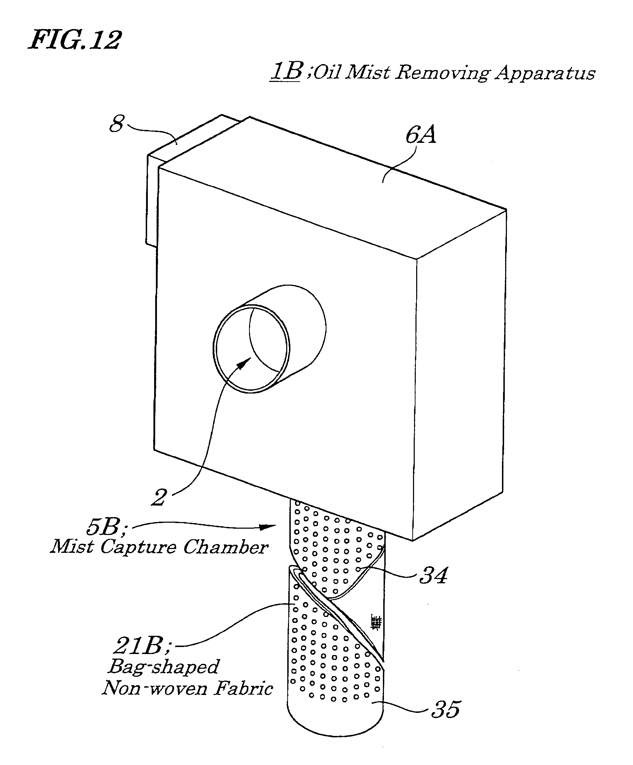

Fig. 12 is a perspective view showing a schematic configuration of the oil mist removing apparatus according to the third embodiment of the present invention;

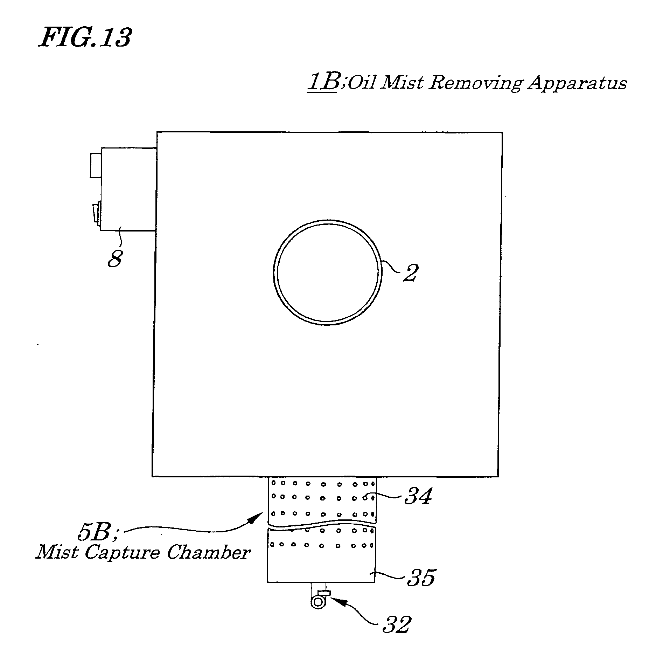

Fig. 13 is an elevation view showing a schematic configuration of the oil mist removing apparatus according to the third embodiment of the present invention;

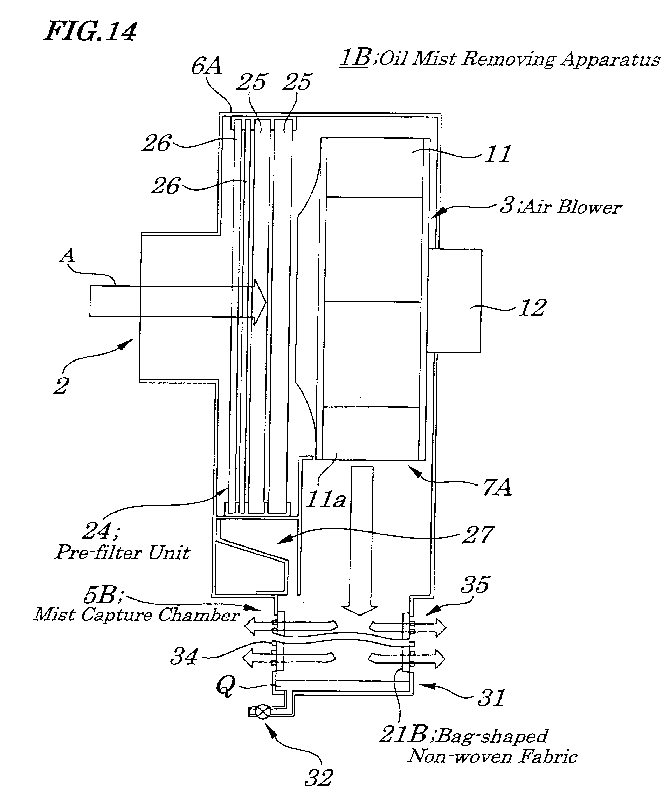

Fig. 14 is a sectional view for explaining an operation of the oil mist removing apparatus according to the third embodiment of the present invention;

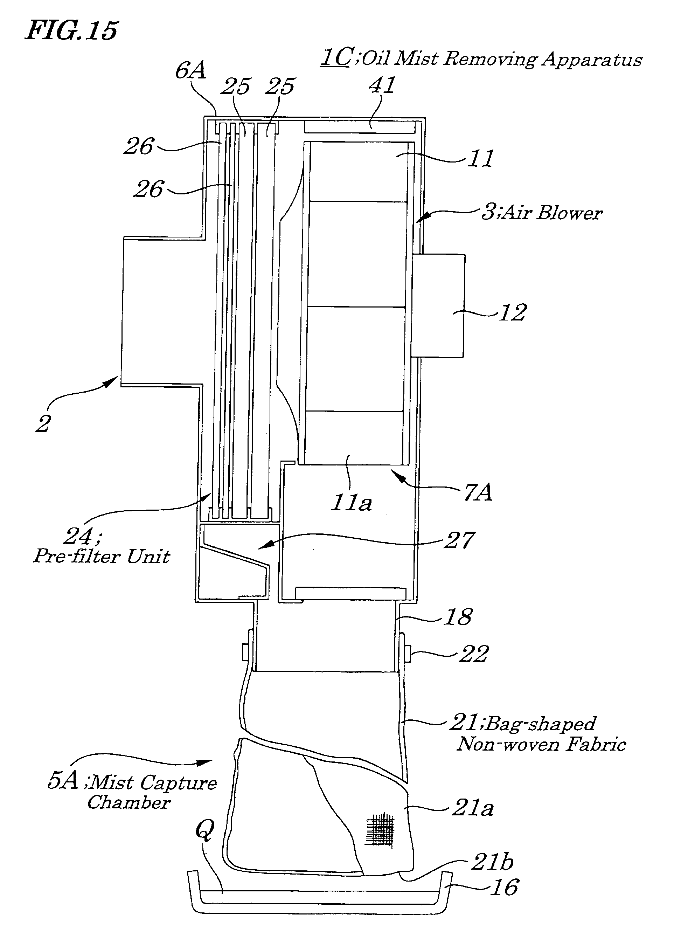

Fig. 15 is a sectional view showing a schematic configuration of an oil mist removing apparatus according to a fourth embodiment of the present invention;

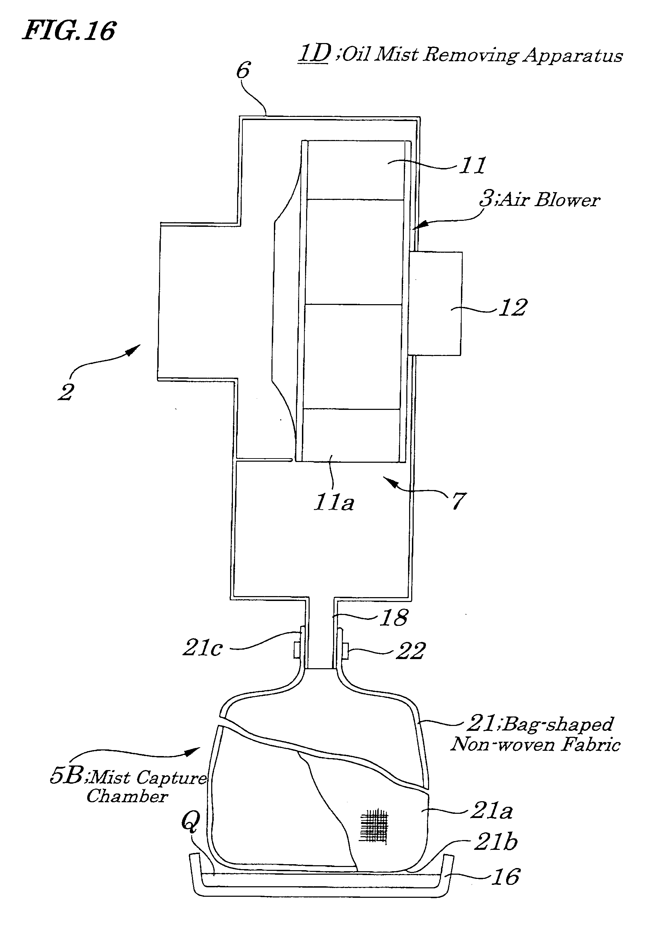

Fig. 16 is a sectional view showing a schematic configuration of an oil mist removing apparatus according to a fifth embodiment of the present invention;

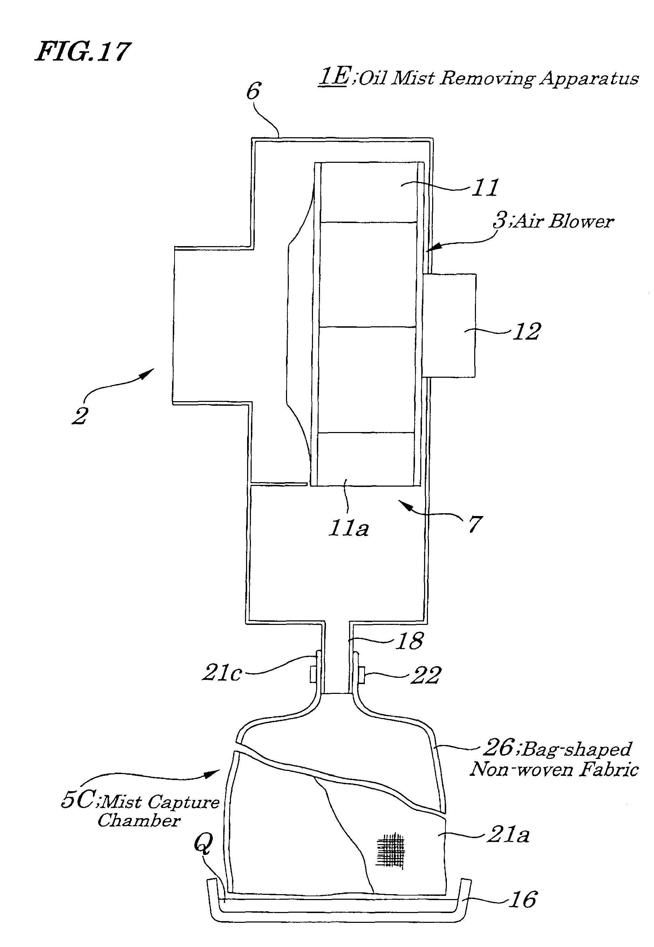

Fig. 17 is a sectional view showing another configuration of an oil mist removing apparatus according to the fifth embodiment of the present invention;
Fig. 18 is a view for explaining a conventional art;

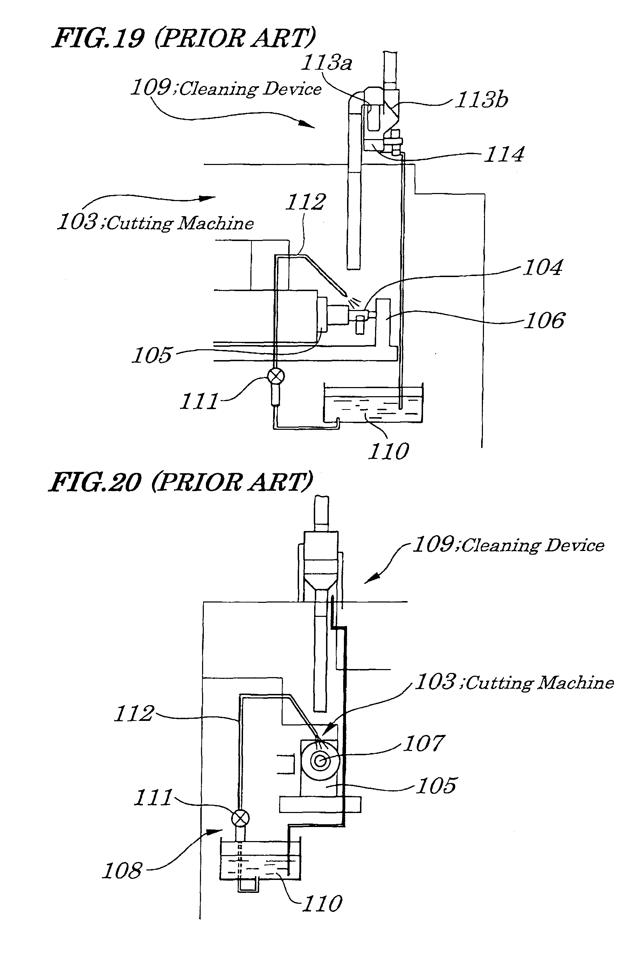

Fig. 19 is a view for explaining the conventional art; and
Fig. 20 is a view for explaining the conventional art.

### DETAILED DESCRIPTION OF THE PREFERRED EMBODIMENTS

Best modes for carrying out the present invention will be described in further detail using various embodiments with reference to the accompanying drawings.

### First Embodiment

Figure 1 is a sectional view showing a schematic configuration of an oil mist removing apparatus according to a first embodiment of the present invention, Fig. 2 is a perspective view showing a schematic configuration of the oil mist removing apparatus; Fig. 3 is an elevation view showing a schematic configuration of the oil mist removing apparatus; Fig. 4 is a perspective view showing a configuration of an air blower of the oil mist removing apparatus; Fig. 5 is a perspective view showing a configuration of a guide unit arranged around the air blower; Fig. 6 is a sectional view for explaining an operation of the oil mist removing apparatus; and Fig. 7 is a view for explaining a function of an mist capture chamber in the oil mist removing apparatus.

The oil mist removing apparatus according to the first embodiment is arranged as a ceiling hanging type, in the vicinity of a machine tool such as a cutting machine and a welding machine, and is used in order to remove oil mist generated in the machine tool and to discharge clean air. For example, a duct fixed to a top of a shade arranged in the vicinity of a pollution source is connected to a cylindrical inlet 2 of the oil mist removing apparatus, and then oil mist is removed.

The oil mist removing apparatus 1, as shown in Fig. 1 to Fig. 5, is provided with an air blower (air exhaust intake fan) 3 for jetting the air drawn from the cylindrical inlet 2 at high speed, an mist capture chamber 5 for allowing the air jetted from the air blower 3 to pass, capturing and removing the oil mist, and exhausting cleaned air, a guide unit 7 arranged in a casing 6 for storing the air blower 3 so as to surround a side edge of the air blower 3, receiving air blown from the air blower 3 in a centrifugal direction and guiding the air to the mist capture chamber 5, and a control unit 8 for supplying a power to the air blower 3 to operate the air blower 3.

The air blower 3, as shown in Fig. 4, is a centrifugal turbocharged air blower provided with a blade wheel 11 having made up of a plurality of blades 11a, 11a ... which are arranged in a radial shape, and a motor 12 for driving the blade wheel 11, and is fixed to the casing 6 in a manner that a shaft of the blade wheel 11 and the motor 12 is approximately common with a central axis of the inlet 2.

The mist capture chamber 5 is provided under the casing 6, is fixed to a cylindrical connection part 18 for introducing the air discharged from the air blower 3 to the mist capture chamber 5 in a drooping condition, is extended downwardly in a vertical direction, and is provided with a bag-shaped non-woven fabric (filtering member) 21 using synthetic resin in an approximate cylindrical shapeofapredeterminedlength (forexample, 10-100cm) and width (for example, 0.2mm-3cm) with flexibility. That is, the mist capture chamber 5 includes an inflow port for causing the air with the mist pressurized and accelerated by the air exhaust intake fan portion flow through, an oil collection tray (mist capture portion) 16 arranged to block the flow of the air with mist flowing in via the inflow port, for capturing the mist by causing the mist collide directly or indirectly therewith, and the bag-shaped non-woven fabric (such as bonded fabric, bonded textile or a like) 21, surrounding a specified space between the inflowport and the mist capture portion, for exhausting the cleaned air.

On (approximate cylindrical-shaped) filter wall portion 21a made up of the bag-shaped non-woven fabric 21, the air discharged from the air blower 3 and passing along an axial direction of the bag-shaped non-woven fabric 21 is blown, and the air passes through the filter wall portion 21a.

More specifically, the oil mist moves downwardly by the inertial force and the gravity thereof. The air blown on the filter wall portion 21a among the air passing along the axial direction of the bag-shaped non-woven fabric 21 does not include oil mist which cannot follow the rapid change of movement direction. Therefore, the cleaned air is discharged from the filter wall portion 21a.

In the first embodiment, the lower part of the bag-shaped non-woven fabric 21 is closed to be a bottom 21b. The oil mist which drops on the bottom 21b and is captured is flocculated so as to be oil Q. The oil Q drops on the oil collection tray 16 arranged directly below the bottom 21b, and is stored.

Further, the top of the bag-shaped non-woven fabric 21 is fixed to the cylindrical connection part 18 with mounting hardware 22.

The guide unit 7, as shown in Fig. 5, is provided with a guide plate 23 arranged in the casing 6 so as to surround the side edge of the air blower 3, so that the air including the oil mist is accelerated in the air blower 3 by centrifugal force, is blown directly on the guide plate 23, and is introduced to the mist capture chamber 5.

Next, an explanation will be given of the operation of the oil mist removing apparatus 1 with reference to Fig. 6 and Fig. 7.

As shown in Fig. 6, air 'A' generated in the machine tool and including oil mist is sucked through the cylindrical inlet 2 by operation of the air blower 3, flows into the central part of the air blower 3 (the inner part of the blade wheel 11), turns by being pushed by each blade 11a in the blade wheel 11, and is compressed and conveyed through a space between the blade 11a and the blade 11a toward the outer part of the blade wheel 11.

At the same time, the air including oil mist is accelerated in the air blower 3 by centrifugal force, is directly blown on the guide plate 23 arranged in the casing 6 so as to surround the side edge of the air blower 3, and is introduced to the mist capture chamber 5.

Further, a part of oil mist P1 contained in the air directly blown on the guide plate 23 collides with the guide plate 23, and is adsorbed/ adhered and removed.

As shown in Fig. 7, the oil mist P1 included in the air which is introduced to the mist capture chamber 5 moves toward the bottom 21b at the lower end of the bag-shaped non-woven fabric 21 along the axial direction of the bag-shaped non-woven fabric 21 by the inertial force and the gravity thereof. Air blown on the filter wall portion 21a on its way in an air passage along the axis direction of the bag-shaped non-woven fabric 21 does not include oil mist which cannot follow the rapid change of the movement direction. Therefore, the air discharged from the filter wall portion 21a is further cleaned, and is exhausted.

In the mist capture chamber 5, the oil mist which drops on the bottom 21b and is captured is flocculated so as to be the oil Q. The oil Q drops on the oil collection tray 16 arranged directly below the bottom 21b, and is stored.

Also, the control unit 8 changes the suction force of the air blower 3 in accordance with the amount of the oil mist P1 generated in the machine tool, and performs oil mist removal most efficiently.

As described above, according to the first embodiment, the air drawn from the inlet 2 and including the oil mist is accelerated by centrifugal force in the air blower 3, passes toward the mist capture chamber 5 by the guide plate 23. In the mist capture chamber 5, the air moves toward the bottom 21b at the lower end of the bag-shaped non-woven fabric 21 along the axis direction of the bag-shaped non-woven fabric 21 by the inertial force and the gravity thereof while passing through the bag-shaped non-woven fabric 21. Air blown on the filter wall portion 21a on its way in an air passage along the axis direction of the bag-shaped non-woven fabric 21 does not include oil mist which cannot follow the rapid change of the movement direction. Therefore, the air discharged from the filter wall portion 21a is further cleaned, and is exhausted.

As a result, the oil mist removing efficiency can be improved with a simple configuration, and it is possible to contribute to cost reduction, size reduction, and weight reduction.

### Second Embodiment

Next, explanations will be given of the second embodiment according to the present invention.

Figure 8 is a sectional view showing a schematic configuration of an oil mist removing apparatus 1A according to a second embodiment of the present invention, Fig. 9 is a view for explaining an operation of the oil mist removing apparatus 1A, and Fig. 10 is a view for explaining a function of a porous filter 25 of a pre-filter unit 24 in the oil mist removing apparatus 1A.

A difference between the oil mist removing apparatus 1A of the second embodiment and that of the first embodiment is that the pre-filter unit 24 is arranged upstream to an air blower 3.

Other parts are approximately similar to those of the first embodiment, and therefore, explanations thereof will be omitted.

The oil mist removing apparatus 1A, as shown in Fig. 8, is provided with the air blower 3 for compressing and sending the air drawn from a cylindrical inlet 2, the pre-filter unit 24 arranged upstream to the air blower 3 and removing oil mist generated with use of a machine tool from unclean air drawn via the inlet 2, an mist capture chamber 5 arranged downstream of the air blower 3, and capturing and removing oil mist which is not removed by the pre-filter unit 24, a guide unit 7A arranged in a casing 6A for storing the air blower 3 and the pre-filter unit 24 so as to surround a side edge of the air blower 3, receiving air blown from the air blower 3 in a centrifugal direction, and guiding the air to the mist capture chamber 5, and a control unit 8 for supplying a power to the air blower 3 to operate the air blower 3.

The pre-filter unit 24 is provided with two porous filters 25, 25 arranged upstream to the air blower 3 and for capturing oil mist contained in the air, two pre-filters 26 arranged at the front of the porous filters 25, 25 and made of steel fabrics, and an oil flow unit 27 for running flocculate of oil mist captured by the porous filters 25, 25 down to an oil collection tray 16 arranged directly below an end (lower end) of the mist capture chamber 5.

As the porous filters 25, 25a known nickel metal filter 25a (manufactured by Japan Metals & Chemicals Co., Ltd.) isused singly. The nickel metal filter has a porous structure, is porous solid made by impregnating foam polyurethane with nickel powder and sintering.

The nickel metal filter 25a has functions for effectively removing oil, greasy fumes, water vapor, and the like, and has a characteristic that pressure loss is small.

Next, an explanation will be given of the operation of the oil mist removing apparatus 1A with reference to Fig. 9 and Fig. 10.

First, as shown in Fig. 9, air 'A' generated in the machine tool and including oil mist is introduced to the pre-filter unit 24 through the inlet 2 by operation of the air blower 3.

In the pre-filter unit 24, the air A passes through the pre-filters 26, 26 so that oil mist of large size is removed, and then reaches the porous filter 25. As shown in Fig. 10, for example, when the air A in which oil mist P1 and water vapor P2 are mixed collides with the nickel metal filter 25a to be the porous filters 25, the oil mist P1 is nearly all captured since the nickel metal filter 25a is porous and has a extremely large surface area.

Further, oil mist P1 captured and separated by the nickel metal filter 25a is flocculated so as to be oil Q, flows down in the oil flow unit 27, drops on a bottom 21b of a bag-shaped non-woven fabric 21, and then is stored in the oil collection tray 16 arranged directly below the bottom 21b as the oil Q.

The air A which has passed through the porous filters 25, 25 includes a small amount of oil mist P1. The air A in which the oil mist is nearly all removed by the porous filters 25, 25 flows into the central part of the air blower 3 (the inner part of a blade wheel 11), turns by being pushed by each blade 11a of the blade wheel 11, and is compressed and conveyed through a space between the blade 11a and the blade 11a toward the outer part of the blade wheel 11.

At the same time, the air including oil mist is accelerated in the air blower 3 by centrifugal force, is directly blown on the guide plate 23 arranged in a casing 6A so as to surround the side edge of the air blower 3, and is introduced to the mist capture chamber 5.

Remaining oil mist P1 introduced to the mist capture chamber 5, without being removed by the pre-filter unit 24, moves toward the bottom 21b at the lower end of the bag-shaped non-woven fabric 21 along the axis direction of the bag-shaped non-woven fabric 21 by the inertial force and the gravity thereof. Therefore, oil mist results in being further removed from air blown on a filter wall portion 21a on its way in an air passage along the axis direction of the bag-shaped non-woven fabric 21. Oil mist still remaining in the air blown on the wall 2a is filtered by the filter wall portion 21a as well. Therefore, the air exhausted from the filter wall portion 21a is further cleaned, and is exhausted.

In the mist capture chamber 5, the oil mist which drops on the bottom 21b and is captured is flocculated so as to be oil Q. The oil Q drops on the oil collection tray 16 arranged directly below the bottom 21b, and is stored.

Also, the control unit 8 changes the suction force of the air blower 3 in accordance with the amount of the oil mist P1 generated in the machine tool, and performs oil mist removal most efficiently.

As described above, according to the second embodiment , first, in the air drawn A from the inlet 2 and including the oil mist, almost the oil mist is removed by specifically the nickel metal filter 25a in the pre-filter unit 24. The slight oil mist is accelerated by centrifugal force in the air blower 3, and passes toward the mist capture chamber 5 by the guide plate 23. In the mist capture chamber 5, the air moves toward the bottom 21b at the lower end of the bag-shaped non-woven fabric 21 along the axis direction of the bag-shaped non-woven fabric 21 by the inertial force and the gravity thereof while passing through the bag-shaped non-woven fabric 21. Air blown on the filter wall portion 21a on its way in an air passage along the axis direction of the bag-shaped non-woven fabric 21 does not include oil mist which cannot follow rapid change of movement direction. Therefore, the air discharged from the filter wall portion 21a is further cleaned, and is exhausted.

As a result, the oil mist removing efficiency can be improved with a simple configuration, and it is possible to contribute to cost reduction, size reduction, and weight reduction.

### Third Embodiment

Next, explanations will be given of the third embodiment according to the present invention.

Figure 11 is a sectional view showing a schematic configuration of an oil mist removing apparatus 1B according to a third embodiment of the present invention, Fig. 12 is a perspective view showing a schematic configuration of the oil mist removing apparatus 1B, Fig. 13 is an elevation view showing a schematic configuration of the oil mist removing apparatus 1B, Fig. 14 is a view for explaining an operation of the oil mist removing apparatus 1B.

A difference between the oil mist removing apparatus 1B of the third embodiment and that of the second embodiment is that a bag-shaped non-woven fabric is arranged at an inner wall side of an exhaust pipe of which a wall is provided with a plurality of exhaust holes.

Other parts are approximately similar to those of the second embodiment, and therefore, explanations thereof will be omitted.

The oil mist removing apparatus 1B, as shown in Fig. 11 to Fig. 13, is provided with an air blower 3 for compressing and conveying the air drawn from an inlet 2, a pre-filter unit 24 arranged upstream to the air blower 3 and removing oil mist generated from use of machine tool from unclean air drawn from the inlet 2, an mist capture chamber 5B arranged downstream to the air blower 3, and capturing and removing oil mist which is not removed by the pre-filter unit 24, a guide unit 7A arranged in a casing 6A for storing the air blower 3 and the pre-filter unit 24 so as to surround a side edge of the air blower 3, receiving air blown from the air blower 3 in a centrifugal direction and guiding the air to the mist capture chamber 5B, an oil storage unit 31 for storing flocculate of oil mist captured by the pre-filter unit 24 and the mist capture chamber 5B, an oil discharging part 32 fixed to the bottom of the oil storage unit 31 and used to discharge the oil stored in the oil storage unit 31, and a control unit 8 for supplying a power to the air blower 3 to operate the air blower 3.

The mist capture chamber 5B is provided with a cylindrical exhaust pipe 35 of a predetermined length (for example, 1 meter) fixedtothebottomof the casing 6A in a drooping condition, extended downwardly in a vertical direction, and having a plurality of exhaust holes 34 like small holes in the peripheral wall face, and a bag-shaped non-woven fabric 21B made of non-woven fabric in a cylindrical shape and arranged in the inner wall side of the exhaust pipe 35.

Further, the lower end of the exhaust pipe 35 is closed to from the oil storage unit 31.

Slight oil mist P1 included in the air which is introduced to the exhaust pipe 35 and has not removed in the pre-filter unit 24 moves toward the oil storage unit 31 at the lower end of the exhaust pipe 35 along the axis direction of the exhaust pipe 35 by the inertial force and the gravity thereof. Air is blown on the bag-shaped non-woven fabric 21b on its way in an air passage along the axis direction of the exhaust pipe 35 while the oil mist is removed from the air. Then, further cleaned air is discharged from the exhaust hole 34.

Next, an explanation will be given of the operation of the oil mist removing apparatus 1B with reference to Fig. 14.

First, as shown in Fig. 14, air A generated in the machine tool and including oil mist is introduced to the pre-filter unit 24 through the inlet 2 by operation of the air blower 3.

In the pre-filter unit 24, the air A passes through the pre-filters 26, 26 so that oil mist of large size is removed, and then reaches the porous filters 25, 25. For example, when the air A in which oil mist P1 and water vapor P2 are mixed collides with the nickel metal filter 25a to be the porous filter 25, oil mist P1 is nearly all captured since the nickel metal filter 25a is porous and has a extremely large surface area.

Further, oil mist P1 captured and separated by the nickel metal filter 25a is flocculated to be oil Q, flows down in an oil flow unit 27, and is sent to the oil storage unit 31.

The oil Q is discharged from the oil storage unit 31 by operating the oil discharging part 32 when the air blower 3 is stopped not in use of the machine tool.

The airAwhich has passed through the porous filter 25 includes a small amount of oil mist P1. The air A in which the oil mist is almost removed by the porous filter 25, flows into the central part of the air blower 3 (the inner part of the blade wheel 11), turns by being pushed by each blade 11a of the blade wheel 11, and is compressed and conveyed through a space between the blade 11a and the blade 11a toward the outer part of the blade wheel 11.

At the same time, the air including oil mist is accelerated in the air blower 3 by centrifugal force, is directly blown on a guide plate 23 arranged in the casing 6A so as to surround the side edge of the air blower 3, and is introduced to the exhaust pipe 35.

Slight oil mist P1 included in the air which is introduced to the exhaust pipe 35 and has not removed in a main removing part 4 and the guide plate 23 moves toward a bottom 21b at the lower end of the bag-shaped non-woven fabric 21 along the axis direction of the bag-shaped non-woven fabric 21 by the inertial force and the gravity thereof. Air is blown on the bag-shaped non-woven fabric 21b on its way in an air passage along the axis direction of the exhaust pipe 35, while the oil mist is removed from the air.

As described above, further cleaned air is discharged from the exhaust holes 34.

In the mist capture chamber 5B, the oil mist P1 drops and is stored in the oil storage unit 31 as oil, and the oil is discharged by operating the oil discharging part 32 when the air blower 3 is stopped not in use of the machine tool.

Also, the control unit 8 changes the intake force of the air blower 3 in accordance with the amount of the oil mist P1 generated in the machine tool, and performs oil mist removal most efficiently.

As described above, according to the third embodiment, in the air drawn from the cylindrical inlet 2 and including the oil mist, almost all of the oil mist is specifically removed by the nickel metal filter 25a in the pre-filter unit 24. The remaining oil mist which is not removed by the pre-filter unit 24 is accelerated by centrifugal force in the air blower 3, and passes through the exhaust pipe 35 by the guide plate 23 so as to be exhausted from the exhaust holes 34 formed on the pipe wall. At the same time, the oil mist flows along the axis direction of the exhaust pipe 35 by the inertial force. Therefore, the cleaned air in which oil mist is removed is discharged from the exhaust hole 34.

As a result, the oil mist removing efficiency can be improved with a simple configuration, and it is possible to contribute to cost reduction, size reduction, and weight reduction of the oil mist removal apparatus.

### Fourth Embodiment

Next, explanations will be given of the fourth embodiment according to the present invention.

Figure 15 is a sectional view showing a schematic configuration of an oil mist removing apparatus 1C according to a fourth embodiment of the present invention.

A difference between the oil mist removing apparatus 1C of the fourth embodiment and that of the second embodiment is that long adsorptive/ adhesive sheet 41 for adsorbing/ adhering oil mist is arranged in a guide plate 23 at a side of an air blower 3.

In the fourth embodiment, at the side of the air blower 3 of the guide plate 23 in a guide unit 7A, the long adsorptive/ adhesive sheet 41 for adsorbing / adhering oil mist and made of woven fabric or the like is arranged so as to surround the side edge of the air blower 3.

The adsorptive/ adhesive sheet 41 is made by plain-weaving string made from a polymeric material, and is positioned in a manner that oil mist in the air is accelerated by centrifugal force in the air blower 3 so as to be blown directly. Also, the oil mist is adsorbed by/to the adsorptive/ adhesive sheet 41 by its inertial force while the air in which the oil mist is removed changes its flow direction rapidly so as to flow toward a mist capture chamber 5A.

As described above, according to the fourth embodiment, it is possible obtain effects approximately similar to those of the second embodiment.

In addition, since the long adsorptive/ adhesive sheet 41 is arranged, oil mist P1 which has passed through a pre-filter unit 24 is accelerated by centrifugal force in the air blower 3, collides with the adsorptive/ adhesive sheet 41 with its inertial force and adsorbed/ adhered, even if the oil mist P1 flows toward the mist capture chamber 5A. Therefore, it is possible to remove oil mist more ef f iciently.

### Fifth Embodiment

A mist removing apparatus according to a fifth embodiment on the present invention, as same configuration as shown in Fig. 1, includes an air blower 3 for drawing in the air with mist; and a mist capture chamber 5 for capturing/ removing the mist from the air flowing in from the air blower 3 and for exhausting the cleaned air. The mist capture chamber 5 includes an inflow port for causing the air with the mist pressurized and accelerated by the air blower 3 flow through, an oil collection tray 16 (mist capture portion), and a bag-shaped non-woven fabric (filtering member) 21, surrounding a specified space between the inflow port and the an oil collection tray 16, for exhausting the cleaned air. The oil collection tray 16 (mist capture portion) is arranged to block the flow of the air with mist flowing in via the inflow port, and captures the mist by causing the mist collide indirectly (via bottom 21b of the bag-shaped non-woven fabric 21) therewith.

The air blower 3 may be configured to draw in the air with mist from an external, and flocculate the mist contained in the air by pressurizing (as shown in Fig. 16) the air in order to increase mist capturing/ efficiency. For example, it become possible to obtain a pressurized air by using a cylindrical connection part 18 having a small cross-sectional area as shown in Fig. 16.

Also, as shown in Fig. 17, a cylindrical non-woven fabric 2 6 of which both ends are opened may be used instead of the bag-shaped non-woven fabric 21 of which an end is closed, such that the oil collection tray 16 (mist capture portion) can capture the mist by causing the mist collide directly (not via bottom 21b of the bag-shaped non-woven fabric 21) therewith.

### Sixth Embodiment

A mist removing apparatus according to a sixth embodiment on the present invention, as same configuration as shown in Fig. 16, includes an air blower 3 for drawing in the air with mist; and a mist capture chamber 5 for capturing/ removing the mist from the air flowing in from the air blower 3 and for exhausting the cleaned air. The mist capture chamber 5 includes an inflow port for causing the air with the mist pressurized and accelerated by the air blower 3 flow through, and a bag-shaped non-woven fabric (filtering member) 21, surrounding a specified space under the inflow port, for exhausting the cleaned air.

In the sixth embodiment, the mist capture chamber 5 is configured to serve as an adiabatic expansion chamber for flocculating the mist flowing in via the inflow port to be captured by the bag-shaped non-woven fabric 21. A cross-sectional area of the inflow port is preferably set within a range of 1/2 to 1/5 of same of the bag-shaped non-woven fabric 21.

### Sixth Embodiment

A mist removing apparatus according to a seventh embodiment on the present invention, as same configuration as shown in Fig. 16, includes an air blower 3 for drawing in the air with mist from an external, and for flocculating the mist contained in the air by pressurizing the air; and a mist capture chamber 5 for capturing/ removing the mist from the air flowing in from the air blower 3 and for exhausting the cleaned air.

The mist capture chamber 5 includes an inflow port for causing the air with the mist pressurized and accelerated by the air blower 3 flow through, and a bag-shaped non-woven fabric (filtering member) 21, surrounding a specified space under the inflow port, for exhausting the cleaned air. Also, in this embodiment, the mist capture chamber is configured to serve as an adiabatic expansion chamber for flocculating further the mist flowing in via the inflow port to be captured by the bag-shaped non-woven fabric 21.

It is thus apparent that the present invention is not limited to the above embodiments but may be changed and modified without departing from the scope of the invention.

For example, in the above-described embodiments, the apparatus is used in a factory, however, the present invention is not limited to this, it may be applied to a restaurant such as a barbecue restaurant, or to household use.

Also, a blade wheel in the air blower 3 may be a radial blade, or a backward blade in addition to a forward blade.

Further, the oil mist removing apparatus is not limited to the ceiling-hanging type, and a floor-mounted type may be available. Also, it is not limited to for local exhaust, and it may be available to wide exhaust.

In the first embodiment and the second embodiment, the bag-shaped non-woven fabric is used as a ventilation member, however, the non-woven fabric is not limited to synthetic resin, and paper may be used. Also, it is not limited to the non-woven fabric, and woven fabric may be available. Porous foam such as polyurethane may also be used.

In the first embodiment, viewed from the side, a bag-shaped non-woven fabric 21 may be arranged in a manner that a bottom 21b is positioned within an oil collection tray 16 (end face is hidden) or the bottom 21b is positioned to provide a space between the bottom 21b and the oil collection tray 16.

In the second embodiment, in the filter unit, a filter is not limited to the porous filter, and a fabric filter may be available. It is not limited to two porous filters, and one porous filter or three porous filters may be available. A porous filter may be arranged downstream to the air blower 3. Further, the pre-filters may be omitted.

Also, an exhaust pipe may be connected to the bottom of the oil collection tray, and an oil discharging part may be provided.

Further, the whole of the apparatus including the bag-shaped non-woven fabric 21 may be stored in a casing 6.

In the second embodiment, the length of the exhaust pipe is not limited to one meter, and may be set approximately. Also, the exhaust pipe may be arranged in a horizontal direction or in a downwardly slanting direction, not only being hung down in the vertical direction, or the exhaust pipe may be provided with a bent part. Also, a plurality of exhaust pipes may be extended from a plurality of positions in the casing 6.

In the third embodiment, as the fabric material of the adsorptive/ adhesive sheet 41, hollow fabric may be used. For example, non-woven fabric made of paper may be used, or porous foam such as polyurethane may be used.

Also, according to the above-described embodiments, the following is considered. In the mist capture chamber 5 made of the bag-shaped non-woven fabric, a high-speed air-flow discharged from the airblower 3 slows down as advances ahead, and adiabatically expands in association with that the outside is in contact with the filtering member which is relatively rough, so that the oil mist is flocculated and is captured by fabric of the bag-shaped filtering member. Further, the fabric of the bag-shaped bonded 2 becomes a core so as to promote flocculation of the oil mist. In a case of using this mechanism, the mist capture chamber 5 including the bag-shaped bonded 21 functions as an adiabatic expansion camber. Needless to say, since a boundary between the adiabatic expansion chamber and the outside is made of the filtering member which is relatively rough, the exhaust air in itself adiabatically expands toward the outside.

The oil mist removing apparatus according to the present invention is available to removal of not only oil mist but also other mist (for example, ink mist). Also, it is available to removal of dust such as powered metal.

## Claims

1. A mist removing apparatus for drawing in air with mist, removing the mist contained in the air, and exhausting cleaned air, the apparatus **characterized by** comprising:
an air exhaust intake fan portion (3) for drawing in the air with mist; and
a mist capture chamber (5) for capturing/ removing the mist from the air flowing in from said air exhaust intake fan portion (3) and for exhausting the cleaned air, and
wherein said mist capture chamber (5) comprises an inflow port for causing the air with the mist pressurized and accelerated by the air exhaust intake fan portion (3) flow through, a mist capture portion arranged to block the flow of the air with mist flowing in via said inflow port, for capturing the mist by causing the mist collide directly or indirectly therewith, and
afilteringmember (21), surroundingaspecifiedspacebetween said inflow port and said mist capture portion, for exhausting the cleaned air.

2. A mist removing apparatus for drawing in air with mist, removing the mist contained in the air, and exhausting cleaned air, the apparatus **characterized by** comprising:
an air exhaust intake fan portion (3) for drawing in the air with mist from an external, and for flocculating the mist contained in the air by pressurizing the air; and
a mist capture chamber (5) for capturing/ removing the flocculated mist from the air flowing in from said air exhaust intake fan portion (3) and for exhausting the cleaned air, and
wherein said mist capture chamber (5) comprises an inflow port for causing the air with the mist pressurized and accelerated by the air exhaust intake fan portion (3) flow through, a mist capture portion arranged to block the flow of the air with mist flowing in via said inflow port, for capturing the mist by causing the mist collide directly or indirectly therewith, and
afilteringmember (21), surroundingaspecifiedspacebetween said inflow port and said mist capture portion, for exhausting the cleaned air.

3. A mist removing apparatus for drawing in air with mist, removing the mist contained in the air, and exhausting cleaned air, the apparatus **characterized by** comprising:
an air exhaust intake fan portion (3) for drawing in the air with mist; and
a mist capture chamber (5) for capturing/ removing the mist from the air flowing in from said air exhaust intake fan portion (3) and for exhausting the cleaned air, and
wherein said mist capture chamber (5) comprises an inflow port for causing the air with the mist pressurized and accelerated by the air exhaust intake fan portion (3) flow through, and
a filtering member (21), surrounding a specified space under said inflow port, for exhausting the cleaned air,
said mist capture chamber (5) configured to serve as an adiabatic expansion chamber for flocculating the mist flowing in via said inflow port to be captured by said filtering member (21).

4. A mist removing apparatus according to Claim 3, wherein a cross-sectional area of said inflow port is set within a range of 1/2 to 1/5 of same of said filtering member (21).

5. A mist removing apparatus for drawing in air with mist, removing the mist contained in the air, and exhausting cleaned air, the apparatus **characterized by** comprising:
an air exhaust intake fan portion (3) for drawing in the air with mist from an external, and for flocculating the mist contained in the air by pressurizing the air; and
a mist capture chamber (5) for capturing/ removing the mist from the air flowing in from said air exhaust intake fan portion (3) and for exhausting the cleaned air, and
wherein said mist capture chamber (5) comprises an inflow port for causing the air with the mist pressurized and accelerated by the air exhaust intake fan portion (3) flow through, and
a filtering member (21), surrounding a specified space under said inflow port, for exhausting the cleaned air,
said mist capture chamber (5) configured to serve as an adiabatic expansion chamber for flocculating further the mist flowing in via said inflow port to be captured by said filtering member (21).

6. A mist removing apparatus for drawing in air with mist, removing the mist contained in the air, and exhausting cleaned air, the apparatus **characterized by** comprising:
an air exhaust intake fan portion (3) for drawing in the air with mist;
an air passage through which the air with mist accelerated by the air exhaust intake fan portion (3) passes;
a mist receiving part arranged at an end of the air passage for receiving the mist; and
a filtering member (21) arranged at a side of the air passage and for exhausting the cleaned air.

7. A mist removing apparatus for drawing in air with mist, removing the mist contained in the air, and exhausting cleaned air, the apparatus **characterized by** comprising:
an air exhaust intake fan portion (3) for drawing in the air with mist;
a high-speed air passage through which the air with mist accelerated by the air exhaust intake fan portion (3) passes;
a mist receiving part arranged at an opening end of the high-speed air passage for receiving and capturing the mist; and
a filtering member (21) placed at a side of the high-speed air passage and for exhausting the cleaned air.

8. The mist removing apparatus according to Claim 6, wherein said filtering member (21) is made of any one of a porous material, a fabric material, and a non-woven material.

9. The mist removing apparatus according to Claim 8, wherein said filtering member (21) is made of at least one selected from a porous material, a fabric material, and a non-woven material having openings through which mist having an average size passes.

10. The mist removing apparatus according to Claim 6, wherein a pre-filter for removing the mist is arranged in front of the air exhaust intake fan portion (3).

11. The mist removing apparatus according to Claim 6, wherein said exhaust intake fan portion (3) comprises a centrifugal-type fan having a blade wheel in which a plurality of blades is arranged in a ring-like form and being mounted in a manner that a central axis of said blade wheel approximately conforms to a central axis of said front opening portion, in which said exhaust intake fan portion (3), while being operated, captures air from a direction of said central axis of said blade wheel, provides the captured air with turn-around flows, and forcedly feeds, by using generated centrifugal force, air that turns around, from clearances among said blades toward a direction of a portion surrounding said blade wheel.

12. A mist removing method for removing mist included in drawn in air, and exhausting cleaned air, the method **characterized by** comprising steps of:
drawing in and accelerating air by an air exhaust intake fan portion (3) and exhausting the air at high speed; and
arranging a mist receiving part in front of exhausted air, capturing the mist, and separating and removing the mist from the air, while exhausting the cleaned air via a filtering member (21) to an outside.

13. The mist removing method according to Claim 12, wherein said filtering member (21) is made of any one of a porous material, a fabric material, and a non-woven material.

14. The mist removing method according to Claim 12, wherein said filtering member (21) is made of any one of a porous material, a fabric material, and a non-woven material having openings through which mist having an average size passes.

15. A mist removing apparatus for drawing in air with mist, removing the oil mist included in drawn in air, and exhausting cleaned air, the apparatus **characterized by** comprising:
an air exhaust intake fan portion (3) for drawing in air with mist; and
an adiabatic expansion chamber for removing flocculated oil mist by inflow of air accelerated or compressed with the air exhaust intake fan portion (3) and by adiabatic expansion of the air:
wherein said adiabatic expansion chamber comprising a bag-shaped filtering member (21) of which one end is closed or a cylindrical filtering member (26) of which both ends are open.
